# FASCICULE DE BREVET EUROPEEN

(11) **EP 4 028 945 B1**
(45) Date de publication et mention de la délivrance du brevet: **17.07.2024**
(21) Numéro de dépôt: 20765312.2
(22) Date de dépôt: 08.09.2020
(51) Int. Cl.: G06K 19/077

(54) **PROCÉDÉ DE FABRICATION D'UNE CARTE À PUCE MÉTALLIQUE AVEC MINI ANTENNE RELAIS**
HERSTELLUNGSVERFAHREN EINER METALLISCHEN CHIPKARTE MIT MINIRELAIS-ANTENNE
METHOD FOR MANUFACTURING A METAL SMART CARD WITH RELAY MINI ANTENNA

(30) Priorité: 09.09.2019 EP 19306078
(43) Date de publication de la demande: 20.07.2022
(73) Titulaire: Thales Dis France SAS, 92190 Meudon (FR)
(72) Inventeur: MENDEZ, Lucile, 13881 Gémenos Cedex (FR); SEBAN, Frédérick, 13881 Gémenos Cedex (FR); COLOMBARD, Claude, 13881 Gémenos Cedex (FR); BUYUKKALENDER, Arek, 13881 Gémenos Cedex (FR); MERIDIANO, Jean-Luc, 13881 Gémenos Cedex (FR)
(74) Mandataire: Castelo, Jérôme
(86) Numéro de dépôt international: PCT/EP2020/075113
(87) Numéro de publication internationale: WO 2021/048148

(56) Documents cités:
- WO-A1-2016/188920
- FR-A1- 3 032 294
- US-A1- 2014 209 691
- US-A1- 2016 365 644

## Description

L'invention concerne le domaine des cartes à puce métalliques sans-contact comportant des modules à puce de circuit intégré radiofréquence.

Elle vise en particulier la fabrication de carte à puce comportant une ou plusieurs feuille(s) ou plaque métallique(s).

Les cartes à puce peuvent être du type hybride (contacts et sans-contact) ou purement sans-contact (sans bornier de contacts électriques).

Les cartes à puce peuvent avoir un module de carte à puce comportant sur un substrat isolant, un transpondeur radiofréquence comprenant la puce et l'antenne. Ces modules de carte à puce radiofréquence sont généralement encartés dans une cavité du corps de carte.

L'invention vise plus particulièrement les cartes bancaires comportant un corps majoritairement métallique.

### Art antérieur

Le brevet FR 2743649 décrit un module de carte à puce, à antenne et/ou plages de contact, pouvant être incorporé dans une cavité de corps de carte ou pouvant former une étiquette électronique RFID.

Le brevet EP1031939 (B1) décrit une carte radiofréquence (ou sans-contact) comprenant une antenne relais bobinée en forme de huit, logée dans un corps de carte et couplée électromagnétiquement ou inductivement avec l'antenne du module. L'antenne relais comporte une bobine étroite concentrique avec l'antenne du module et une bobine large pour capter le champ électromagnétique d'un lecteur.

Par ailleurs, on connaît également des dispositifs radiofréquences hybrides, tels que des cartes à contacts et sans-contact, comportant un module de carte à puce à contacts incorporé dans un corps de carte et connecté à une antenne logée dans le corps de carte.

Par ailleurs, il existe des cartes bancaires comportant des éléments métalliques en insert à l'intérieur du corps de carte en matière plastique ou en surface externe du corps de carte tel que l'aluminium, le titane, de l'or. Le métal procure une sensation de lourdeur de la carte qui est très appréciée par les utilisateurs. Il donne aussi un aspect esthétique visible qui en fait un produit haut de gamme pour privilégiés.

US 2014/209691 A1 divulgue une carte à puce comprenant un corps de carte constitué d'une plaque métallique, d'une couche de blindage magnétique, par exemple en ferrite, et d'une couche synthétique. Une ouverture est formée dans la plaque métallique pour un module. Le module comprend des plots de contact, une puce et une antenne de module pour le couplage RF avec une antenne booster disposée en face de l'antenne de module dans l'ouverture. Les caractéristiques dans le préambule de chacune des revendications 1 et 12 sont connues de US 2014/209691 A1.

### Problème technique.

On assiste actuellement à une demande accrue du public pour des cartes à puce lourdes intégrant des matières métalliques. Toutefois, la présence de métal perturbe fortement la communication radiofréquence et les procédés de fabrication sont rendus plus complexes pour obtenir des cartes conformes aux standards en vigueur de la carte à puce.

L'invention a pour objectif un procédé de fabrication aisé (ou simplifié) de cartes à puce qui puisse s'appliquer aux cartes avec métal dans le corps de carte.

En particulier, l'invention vise une structure de carte avec module à puce électronique radiofréquence RF.

La carte peut également avoir une structure satisfaisant les contraintes de tenue mécanique en terme d'ISO et de durabilité dans le temps. De telles cartes peuvent être conformes notamment au standard ISO 7816 et/ ou ISO / IEC 14443 ou équivalents pour effectuer des échanges de communication à contacts et/ou de proximité avec un lecteur à contacts ou de type NFC.

L'invention propose également une structure de carte métallique avec des bords métalliques visibles procurant un maximum de poids, présentant de bonnes performances radiofréquences et facile à fabriquer.

L'invention vise à résoudre les inconvénients ou objectifs précités.

### Résumé de l'invention.

L'invention a pour objet un procédé de fabrication d'une carte à puce selon la revendication 1.

L'invention a aussi pour objet une carte à puce selon la revendication 12. Selon d'autres caractéristiques préférées, le procédé comprend les objets conformes aux revendications 2 à 11 et une carte à puce conforme aux revendications 13 à 14 .

### Descriptif des figures :

- La figure 1 illustre une étape de fabrication d'une carte radiofréquence en cours de montage, avec un espace 7 de réception de l'antenne relais conformément au mode préféré de l'invention ;
- La figure 2 (non-conforme à l'invention) est une vue similaire à la figure 1 montrant un assemblage d'une plaque métallique 4 à des feuilles de couverture ;
- La figure 3 illustre une vue en coupe d'un exemple de carte 1A obtenue conformément à un premier mode de réalisation qui n'est pas conforme à l'invention, pouvant comprendre les éléments de la figure 1, après insertion ou assemblage d'un module de transpondeur 10 et d'un module comprenant l'antenne relais ;
- La figure 4 illustre une vue en coupe d'un second exemple de carte obtenue conformément à un second mode de réalisation selon l'invention, pouvant comprendre les éléments de la figure 1, après insertion ou assemblage du module de transpondeur 3 et d'un module comprenant l'antenne relais ;
- La figure 5 illustre des étapes du procédé de l'invention selon le premier mode de réalisation conforme aux figures 2 à 3 ;
- La figure 6 illustre une structure de carte hybride (contacts et sans-contact) obtenu selon un troisième mode de réalisation selon l'invention avec un bloc d'antenne relais inséré dans une plaque métallique ;
- La figure 7 illustre une structure de carte purement sans-contact obtenu selon un troisième mode de réalisation selon l'invention avec un bloc comportant une antenne relais et un module à puce radiofréquence inséré dans une plaque métallique.
- La figure 8 illustre un bloc d'antenne relais avec un emplacement 40 de module (hybride ou purement sans-contact).

### Description.

D'une manière générale, des références identiques ou similaires d'une figure à l'autre représentent un élément identique ou similaire.

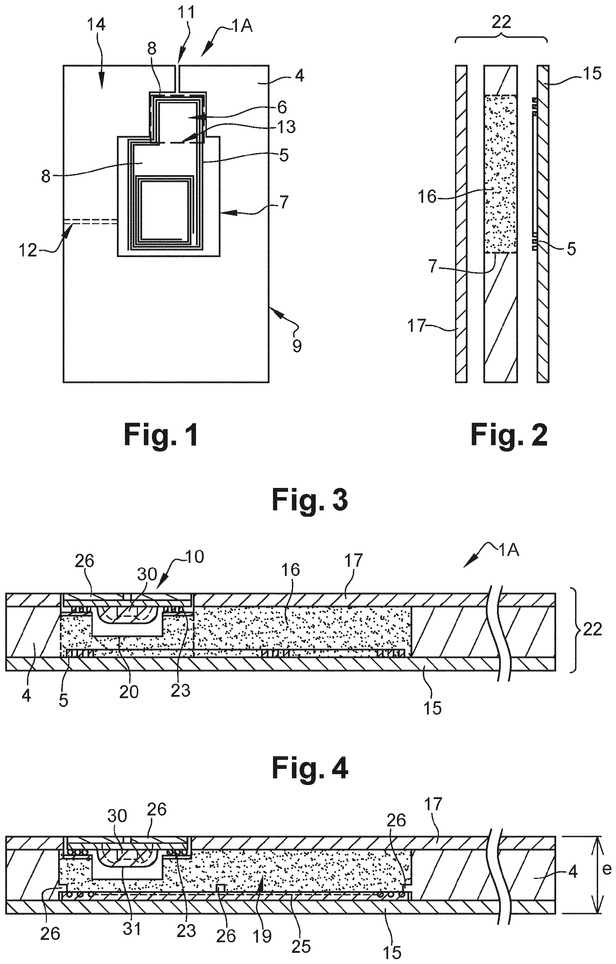

A la figure 1 est illustrée une étape du procédé de fabrication d'une carte à puce radiofréquence.

Le procédé comprend selon un mode une formation d'un insert métallique 1A de corps de carte comportant une antenne relais 5 ; Il comprend aussi une étape d'agencement d'un module à puce et à antenne radiofréquence 10 sur le corps de carte dans un emplacement 6 en regard de l'antenne relais 5 pour un couplage radiofréquence avec le module 10 de transpondeur radiofréquence.

Dans l'exemple, l'insert 1A comporte ou est formé d'une plaque en métal 4. Alternativement, il pourrait comporter plusieurs plaques (ou autres éléments métalliques) assemblées ensemble. Le bord 9 de la plaque 4 est destiné préférentiellement à être visible de l'extérieur du corps de carte 22 (figures 2,3).

Une antenne relais 5 est ici disposée dans le corps de carte et notamment dans un espace correspondant ménagé dans l'insert métallique.

Un module à puce et à antenne radiofréquence pourra être agencé dans l'emplacement 13 sur le corps de carte en regard de l'antenne relais pour un couplage radiofréquence.

Alternativement, le module 10 pourra être directement agencé sur l'antenne relais (ou son substrat support 15).

On verra par la suite différentes possibilités d'agencer le module transpondeur 10 par rapport à l'antenne relais 5 et/ou au corps de carte 22.

Selon l'invention, le procédé comprend l'étape de formation dans l'insert d'un espace 7 perméable au champ radiofréquence, débouchant sur au moins une face principale 14 de l'insert, ledit espace étant configuré aux dimensions de ladite antenne relais 5 pour la recevoir à l'intérieur de cet espace.

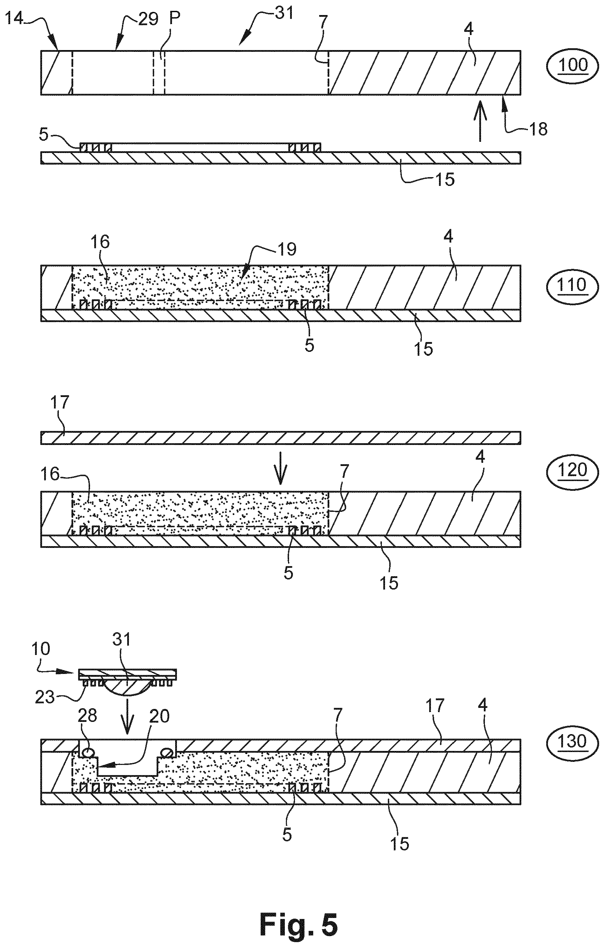

Dans l'exemple de la figure 1, (correspondant à l'étape 100, fig. 5) l'espace 7 a été usiné par estampage ou fraisage dans la plaque de métal 4.

Le procédé peut prévoir une réalisation de plaque 4 à l'unité ou une série de plaques sur une grande plaque métallique (ou un ruban métallique) qui sera ensuite découpée ou estampée, poinçonnée pour extraire chaque plaque.

L'espace perméable 7 peut se présenter sous forme d'un premier évidement 6 dans une zone de couplage du transpondeur à l'aplomb de l'emplacement 8 du transpondeur radiofréquence 10 et un second évidement 8 s'étendant en direction du centre de la plaque à partir du premier évidement 6. Les deux évidements peuvent communiquer entre eux de préférence mais ce n'est pas indispensable. Il peut y avoir une séparation entre les deux par exemple une barrière métallique de la plaque 4.

L'espace 7 est perméable car il est exempt de métal suite à son enlèvement par usinage.

L'espace 7 est usiné ou dimensionné de manière à correspondre sensiblement aux dimensions de l'antenne relais 5. L'antenne relais est comprise dans l'espace 7 (cas d'un module d'antenne relais inséré dans l'espace (fig. 3 et 4)

La plaque 4 peut comporter une fente 11 coupant la plaque dans son épaisseur et s'étendant d'une périphérie externe (ou bord) 9 de la plaque jusqu'à une périphérie interne dudit espace 7 (ou 8) perméable au champ radiofréquence. Cependant, grâce aux performances d'une antenne relais associée au module transpondeur, cette fente 11 (ou entrefer) n'est pas indispensable pour satisfaire notamment de performances conformes à des standards bancaires.

Une autre fente alternative 12 (ou supplémentaire par rapport à la fente 14), peut déboucher dans le second évidement.

Selon une caractéristique additionnelle, le procédé du mode préféré peut prévoir un recouvrement dudit espace 7 par une matière de remplissage 16 . Le procédé comprend un assemblage d'une feuille de couverture 15 (et/ou 17) sur au moins une face (ou les deux faces) principale de l'insert.

Dans l'exemple figure 5, correspondant à l'étape 100, une feuille 15 comportant l'antenne relais 5 est assemblée par laminage et/ou collage à la plaque métallique après qu'elle ait été évidée pour former l'espace 7.

Une autre feuille 17 peut être assemblée (étape 120) sur la face 18 opposée de la plaque 4 à celle recevant la première feuille 15, après que la matière de remplissage 19 ait été déposée dans l'espace 7.

L'espace 7 peut être rempli d'une matière 19 de remplissage, garnissage telle une résine polymère.

Alternativement, les feuilles de recouvrement épaisses 15, 17 peuvent fluer dans l'espace ou jeu J pour le remplir au cours d'un pressage et chauffage de ces feuilles. Alternativement, la matière 19 peut être introduite dans l'espace 7 via un orifice dans une des deux feuilles 15 ou 17.

Selon l'invention, l'antenne relais est réalisée sur un substrat support 25 comme sur les figures 4,6 ou 7 puis le substrat d'antenne relais est inséré dans l'espace perméable.

Sur les figures 2, 3 et 5, la feuille substrat 15 est assemblée sur la face inférieure 18 en surépaisseur par rapport à la plaque.

Par contre, sur un autre mode de réalisation (fig. 4), le substrat 25 a des dimensions sensiblement inférieures aux dimensions de la cavité 7 et peut donc être inséré dans l'épaisseur « e » de la plaque 4 ;

Selon une alternative qui n'est pas selon l'invention, l'antenne relais 5 peut ne pas être formée sur un substrat mais peut être prédécoupée dans du métal puis est posée dans la cavité 7 sur un fond isolant de la plaque (par exemple, une feuille 15 sans antenne préformée dessus).

L'antenne peut être formée à l'aide de toute technologie de formation d'antenne connue de l'homme de l'art notamment par impression ou jet de matière conductrice.

A la figure 4, le substrat 25 portant l'antenne relais 5 peut être calé dans l'espace 7 à l'aide d'excroissances ou épaulements 26 s'étendant de la face interne de l'espace 7 vers l'intérieur de de l'espace.

L'espace 7 peut donc être configuré de manière à former un plan de calage d'un substrat support 25 de l'antenne relais 5 dans l'épaisseur de l'insert ou de la plaque 4.

L'antenne est ici incrustée par ultrasons dans le substrat support 25. Et une autre feuille de recouvrement ou de décoration 15 est assemblée pour recouvrir l'ouverture de l'espace 7 par-dessus le substrat d'antenne relais.

A l'étape 130, (fig. 5), le procédé peut prévoir de former une cavité 20 de réception (ou emplacement) d'un module transpondeur radiofréquence 10 puis l'encartage de ce module dans son emplacement 6, 13 pour un couplage inductif avec l'antenne relais 5.

Sur la figure 3 est illustré un insert de carte à puce ou une carte à puce radiofréquence 22. La carte comprend un insert de corps 22 de carte avec une antenne relais 5 et un module 10 équipé d'une antenne 23 de module radiofréquence, agencé sur le corps 22 de carte, en regard de l'antenne relais 5 pour un couplage radiofréquence avec elle ;

La carte comprend aussi un espace 7 perméable au champ radiofréquence, formé dans la plaque métallique 4 et débouchant sur au moins une face principale de la plaque métallique ; L'espace est configuré aux dimensions de l'antenne relais 5 pour la recevoir à l'intérieur et/ou pour être en regard de l'antenne relais ;

La carte comprend aussi une matière de remplissages 16 ou 19 recouvrant l'espace 7. La carte peut comprendre alternativement ou cumulativement à cette matière 16, 19, une feuille de couverture 17 assemblée sur au moins une face principale 14 de l'insert 22 ou de la plaque 4.

La figure 4 diffère de la figure précédente en ce que le substrat 25 de l'antenne relais est inséré dans l'épaisseur « e » de la plaque métallique 4. Le substrat 25 reçoit normalement une autre feuille de recouvrement 15 sur sa face externe.

A la figure 3, l'antenne est formée ou supportée directement sur la feuille de recouvrement ou feuille externe 15 pour faciliter la mise en œuvre.

Selon une caractéristique avantageuse, l'invention peut prévoir de réaliser séparément un ensemble « tag » (Bloc ou ensemble de transpondeur radiofréquence) comprenant un assemblage de l'antenne relais avec le module radiofréquence ; Puis ce dernier ensemble « tag » est inséré dans l'espace 7. L'ensemble peut comprendre ou pas de la ferrite. Un tel « tag » est divulgué par le demandeur sous la référence Thales DIS / 0159GCTA.

Le tag comprend de préférence un module purement radiofréquence sans plages de contact 26.

Un tel tag peut comprendre une structure bloc comprenant l'antenne relais noyée dans un corps isolant et un module radiofréquence couplé à cette antenne relais.

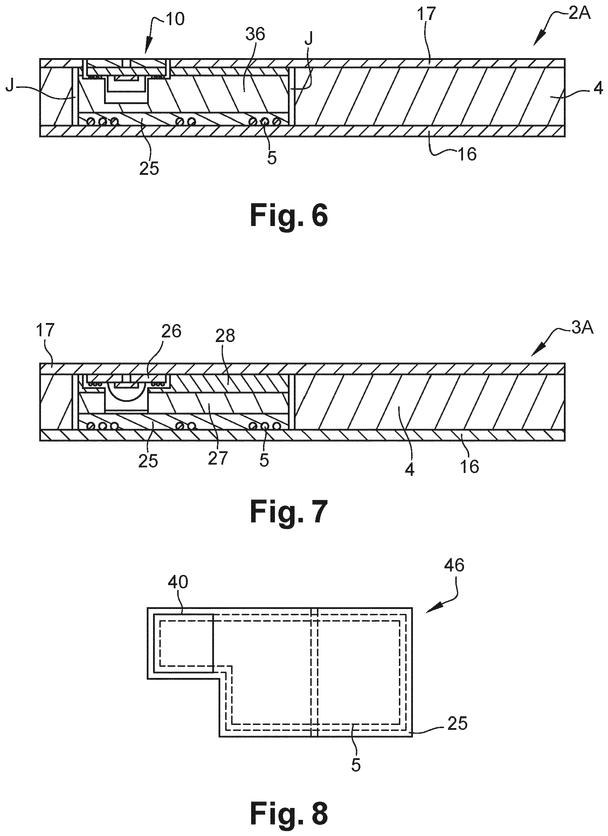

Ce bloc peut être découpé ou formé aux dimensions de l'espace 7 puis inséré dans l'espace 7 de la plaque 4. Ensuite, une feuille de recouvrement peut être assemblée sur chaque face 14, 18 de la plaque notamment à l'aide d'une résine qui peut coller les feuilles et remplir l'interstice (J) entre la structure bloc « tag » et les bords internes de l'espace 7 (fig.6).

L'antenne relais peut être de préférence une antenne relais optimisée configurée sans plaque de condensateur, avec seconde boucle (ou spirale) enchevêtrée dans une première boucle (ou spirale) en sens inverse. Le principe d'une telle antenne relais est décrit dans la demande de brevet internationale WO2016188920 .

L'antenne relais peut présenter une surface totale comprise entre 1/3 et 1/4 de la surface principale de la carte.

L'antenne relais peut par exemple présenter une surface totale égale à 6 ou 7 fois la surface de l'antenne 23 du module.

Un module radiofréquence 10 selon l'invention peut comprendre ceux connus du domaine de la carte à puce.

Un module de carte à puce peut comporter un substrat isolant, un transpondeur radiofréquence comprenant la puce 30 et l'antenne 23 de module. Ces modules de carte à puce radiofréquence sont généralement encartés dans une cavité 20 du corps de carte 22. La puce radiofréquence 30 et ses connexions à l'antenne de module peuvent être enrobées de matière ou résine de protection 30.

Alternativement, le module peut avoir une structure plus fine si fabriquée comme celle d'une étiquette RFID.

L'invention peut avoir l'avantage de réutiliser une structure connue d'un (mini) « tag » pour l'insérer tel que dans un espace ménagée dans une plaque métallique 4 et former ainsi une carte sans-contact métallique lourde avec de bonnes performances radiofréquences.

Les performances sont sensiblement les mêmes que le tag seul puisque l'espace du tag dans la plaque 4 est perméable au champ électromagnétique.

A la figure 6, est illustrée une carte métallique 2A qui diffère de la structure de la figure 4 par le fait que l'antenne relais 5, ou son insert ou substrat support 25 est assemblé à un bloc polymère ou corps de carte polymère 36 préalablement à son assemblage dans la carte 2A.

L'insert ou bloc 36 peut bénéficier d'un jeu J d'assemblage avec la plaque 4. Ce jeu peut être comblé soit par laminage ou adjonction de résine ou colle d'assemblage des feuilles de couvertures 16, 17.

Le module à antenne 10 est encarté comme aux figures 3 ou 4.

Le bloc 36 (fig.8) peut ensuite être découpé ou extrait (aux dimensions de la cavité 7 de la plaque 4 notamment par poinçonnage, d'une grande feuille comportant une pluralité d'antennes relais. La figure 8 peut illustrer l'antenne relais 5 soit sur un substrat 25, soit sur un bloc 46 (5, 25, 36) comprenant une matière isolante 36 assemblée au substrat 25 d'antenne relais 5.

Alternativement, selon un mode de réalisation pratique, l'antenne relais 5 peut être formée sur (ou noyée dans) un substrat ou bloc de matière polymère (résine de moulage) ou toute matière perméable aux champs électromagnétiques et dont les dimensions correspondent sensiblement ou sont légèrement inférieures à celles d'un évidement (ou cavité) 7 d'une plaque de métal 4.

Alternativement à la figure 6, est illustré un autre mode de réalisation à la figure 7 qui diffère de la figure 6 en ce que le bloc d'antenne relais 46 comporte lui-même un module purement radiofréquence (sans plage de contact externes 26).

Le bloc de l'antenne relais 46 peut comporter un noyau de ferrite 27 assemblé entre le substrat 25 d'antenne relais et une feuille ou couche isolante notamment polymère 28. Ce noyau peut s'étendre sur toute la surface de l'insert 46. Il peut y avoir une cavité de réception d'une partie de module purement sans-contact 40 ménagé dans ce noyau ou plaque de ferrite.

Tout ou partie de ce bloc 46 peut comprendre de la ferrite notamment entre les couches 25 & 26 (pour plus de couplage entre l'antenne relais et le transpondeur).

Le module à puce de transpondeur radiofréquence 40 peut être monté sur un insert 46 de l'antenne relais, lui-même avant ou après son assemblage dans ou avec la plaque métallique.

L'antenne relais 5 peut être déposée nue dans la seconde cavité ou évidement de la plaque, puis recouverte de résine. Elle peut être formée sur un substrat diélectrique notamment par gravure électrochimique, à la manière d'un module de carte à puce sur un ruban isolant diélectrique.

L'antenne relais peut être de préférence fabriquée ou configurée de manière à former une capacité du fait des spires imbriquées.

Alternativement, l'antenne relais peut comprendre une capacité sous forme de composant de circuit intégré ou CMS (circuit monté en surface). L'avantage est de confiner la fonction capacité dans un petit circuit peu étendu (au lieu de plaques de condensateur pouvant perturber la réception de champ électromagnétique) pour conserver une perméabilité électromagnétique de la matière située dans la surface de couplage de l'antenne relais. Historiquement, une antenne relais comportait des plaques de condensateur assez étendues pour former une capacité (brevet EP1031939 (B1).

L'invention permet d'optimiser le poids maximal de la plaque métallique d'une carte à puce métallique. Elle permet de conserver un poids maximal et des performances radiofréquences optimisées.

L'art antérieur publié ne permettait pas d'avoir des cartes métalliques aussi lourdes avec performances suffisantes pour satisfaire les standards de communication notamment ISO 14443 & EMVCO. Ces cartes nécessitaient en outre (contrairement à l'invention) d'effectuer une fente 11 ou (entrefer) s'étendant du bord d'une plaque jusqu'à un espace de réception d'un module à antenne ou de la cavité 7 (fente 12) .

## Revendications

1. Procédé de fabrication d'une carte à puce (1A, 2A, 3A) radiofréquence, ledit procédé comprenant les étapes de :
- formation d'un corps (22) de carte comportant une antenne relais (5) et une couche (15,17) de couverture isolante sur au moins une face principale de la carte,
- agencement d'un module (10) équipé d'une antenne de module radiofréquence (23), sur le corps de carte en regard de l'antenne relais pour un couplage radiofréquence ;
- formation d'un insert métallique (4) dans ledit corps de carte, ledit insert s'étendant jusqu'aux bords de la carte et ledit insert métallique (4) comportant un espace (7) perméable au champ radiofréquence débouchant sur au moins l'une des deux faces principales de l'insert **caractérisé en ce que** ladite antenne relais (5) est disposée à l'intérieur de cet espace, et **en ce que** l'antenne relais (5) est réalisée sur un substrat support (25) et le substrat support (25) de l' antenne relais est inséré dans ledit espace perméable.

2. Procédé selon la revendication précédente, **caractérisé en ce que** l'insert comporte ou est formé d'une plaque en métal (4) autour dudit espace (7) perméable au champ radiofréquence.

3. Procédé selon l'une des revendications précédentes, **caractérisé en ce que** l'espace (7) est configuré de manière à former un plan de calage du substrat support de l'antenne relais dans l'épaisseur (e) de l'insert.

4. Procédé selon l'une des revendications précédentes, **caractérisé en ce que** l'antenne relais (5) avec son substrat support (25) est assemblé à l'insert (4) de manière à positionner l'antenne relais en regard dudit espace perméable.

5. Procédé selon l'une des revendications précédentes, **caractérisé en ce que** ledit module (10) est inséré dans une cavité ménagée dans le corps de carte.

6. Procédé selon l'une des revendications précédentes, **caractérisé en ce que** ledit module radiofréquence (10) est préalablement assemblé à l'antenne relais (5) puis inséré dans l'espace (7) avec l'antenne relais.

7. Procédé selon l'une des revendications précédentes, **caractérisé en ce que** ladite antenne relais est configurée sans plaque de condensateur et définit une seconde spirale d'antenne enchevêtrée dans une première spirale d'antenne.

8. Procédé selon l'une des revendications précédentes, **caractérisé en ce que** ladite antenne relais (5) présente une surface totale comprise entre un tiers et un quart de la surface principale de la carte.

9. Procédé selon l'une des revendications précédentes, **caractérisé en ce que** ladite antenne relais (5) présente une surface totale égale à trois ou quatre fois la surface de l'antenne (23) du module (10, 23).

10. Procédé selon l'une des revendications 1 à 8, **caractérisé en ce que** ladite antenne relais (5) présente une surface hors de l'aplomb du module égale de 2 à 4 fois la surface d'un module.

11. Procédé selon l'une des revendications précédentes, **caractérisé en ce que** ladite plaque (4) comprend une fente (11) coupant la plaque dans son épaisseur et s'étendant d'une périphérie externe (9) de la plaque jusqu'à une périphérie interne dudit espace (7) perméable au champ radiofréquence.

12. Carte à puce (1A, 2A, 3A) radiofréquence comprenant:
- un corps (22) de carte comportant une antenne relais (5) et une couche (15,17) isolante de couverture sur au moins une face principale de ladite carte,
- un module (10) équipé d'une antenne de module radiofréquence (23), agencé sur le corps de carte en regard de l'antenne relais pour un couplage radiofréquence ;
- un insert métallique (4) du corps de carte s'étendant jusqu'aux bords de la carte, ledit insert comportant un espace (7) perméable au champ radiofréquence débouchant sur l'une au moins des deux faces principales de l'insert, la carte étant **caractérisée en ce que** ladite antenne relais (5) est disposée à l'intérieur de cet espace, et **en ce que** l'antenne relais (25) est réalisée sur un substrat support (25) et le substrat support (25) de l' antenne relais est inséré dans ledit espace perméable.

13. Carte selon la revendication précédente, **caractérisée en ce que** l'insert comporte ou est formé d'une plaque en métal (4) autour dudit espace perméable (7).

14. Carte selon l'une des revendications 12 ou 13 , **caractérisée en ce que** ladite antenne relais est configurée sans plaque de condensateur et définit une seconde spirale d'antenne enchevêtrée dans une première spirale d'antenne.

## Patentansprüche

1. Verfahren zur Herstellung einer Radiofrequenz-Chipkarte (1A, 2A, 3A), wobei das Verfahren die folgenden Schritte umfasst:
- Bildung eines Kartenkörpers (22) mit einer Relaisantenne (5) und einer isolierenden Deckschicht (15, 17) auf mindestens einer Hauptseite der Karte,
- Anordnung eines Moduls (10), das mit einer Hochfrequenzmodulantenne (23) ausgestattet ist, auf dem Kartenkörper gegenüber der Relaisantenne für eine Hochfrequenzkopplung;
- Bildung eines Metalleinsatzes (4) in dem Kartenkörper, wobei sich der Einsatz bis zu den Rändern der Karte erstreckt und der Metalleinsatz (4) einen für das Hochfrequenzfeld durchlässigen Raum (7) aufweist, der an mindestens einer der beiden Hauptflächen des Einsatzes mündet, **dadurch gekennzeichnet, dass** die Relaisantenne (5) im Inneren dieses Raums angeordnet ist, und **dass** die Relaisantenne (5) auf einem Trägersubstrat (25) realisiert ist und das Trägersubstrat (25) der Relaisantenne in den durchlässigen Raum eingefügt ist.

2. Verfahren nach dem vorhergehenden Anspruch, **dadurch gekennzeichnet, dass** der Einsatz eine Metallplatte (4) um den für das Hochfrequenzfeld durchlässigen Raum (7) herum aufweist oder aus einer solchen gebildet wird.

3. Verfahren nach einem der vorhergehenden Ansprüche, **dadurch gekennzeichnet, dass** der Raum (7) so konfiguriert ist, dass er eine Keilebene für das Trägersubstrat der Relaisantenne in der Dicke (e) des Einsatzes bildet.

4. Verfahren nach einem der vorhergehenden Ansprüche, **dadurch gekennzeichnet, dass** die Relaisantenne (5) mit ihrem Trägersubstrat (25) so mit dem Einsatz (4) zusammengebaut wird, dass die Relaisantenne gegenüber dem durchlässigen Raum positioniert wird.

5. Verfahren nach einem der vorhergehenden Ansprüche, **dadurch gekennzeichnet, dass** der Einsatz (10) mit mindestens einer oder mehreren Polymer-Deck- oder Dekorfolien bedeckt ist.

6. Verfahren nach einem der vorhergehenden Ansprüche, **dadurch gekennzeichnet, dass** das Hochfrequenzmodul (10) zuvor mit der Relaisantenne (5) zusammengebaut und dann mit der Relaisantenne in den Raum (7) eingesetzt wird.

7. Verfahren nach einem der vorhergehenden Ansprüche, **dadurch gekennzeichnet, dass** die Relaisantenne ohne Kondensatorplatte konfiguriert ist und eine zweite Antennenspirale definiert, die mit einer ersten Antennenspirale verschachtelt ist.

8. Verfahren nach einem der vorhergehenden Ansprüche, **dadurch gekennzeichnet, dass** die Relaisantenne (5) eine Gesamtfläche zwischen einem Drittel und einem Viertel der Hauptfläche der Karte aufweist.

9. Verfahren nach einem der vorhergehenden Ansprüche, **dadurch gekennzeichnet, dass** die Relaisantenne (5) eine Gesamtfläche aufweist, die drei- oder viermal so groß ist wie die Fläche der Antenne (23) des Moduls (10, 23).

10. Verfahren nach einem der Ansprüche 1 bis 8, **dadurch gekennzeichnet, dass** die Relaisantenne (5) eine Fläche außerhalb des Modullots aufweist, die dem 2- bis 4-fachen der Fläche eines Moduls entspricht.

11. Verfahren nach einem der vorhergehenden Ansprüche, **dadurch gekennzeichnet, dass** die Platte (4) einen Schlitz (11) umfasst, der die Platte in ihrer Dicke schneidet und sich von einem Außenumfang (9) der Platte bis zu einem Innenumfang des für das Hochfrequenzfeld durchlässigen Raums (7) erstreckt.

12. Radiofrequenz-Chipkarte (1A, 2A, 3A), die Folgendes umfasst:
- einen Kartenkörper (22), der eine Relaisantenne (5) und eine isolierende Deckschicht (15, 17) auf mindestens einer Hauptseite der Karte umfasst,
- ein Modul (10), das mit einer Hochfrequenzmodulantenne (23) ausgestattet ist und auf dem Kartenkörper gegenüber der Relaisantenne zur Hochfrequenzkopplung angeordnet ist;
- einen Metalleinsatz (4) des Kartenkörpers, der sich bis zu den Rändern der Karte erstreckt, wobei der Einsatz einen für das Hochfrequenzfeld durchlässigen Raum (7) aufweist, der an mindestens einer der beiden Hauptflächen des Einsatzes mündet , wobei die Karte **dadurch gekennzeichnet ist, dass** die Relaisantenne (5) im Inneren dieses Raums angeordnet ist, und dadurch, dass die Relaisantenne (25) auf einem Trägersubstrat (25) realisiert ist und das Trägersubstrat (25) der Relaisantenne in den durchlässigen Raum eingefügt ist.

13. Karte nach dem vorhergehenden Anspruch, **dadurch gekennzeichnet, dass** der Einsatz eine Metallplatte (4) um den durchlässigen Raum (7) herum aufweist oder aus dieser gebildet ist.

14. Karte nach einem der Ansprüche 12 oder 13, **dadurch gekennzeichnet, dass** die Relaisantenne ohne Kondensatorplatte konfiguriert ist und eine zweite Antennenspirale definiert, die mit einer ersten Antennenspirale verschachtelt ist.

## Claims

1. A method for manufacturing a radiofrequency chip card (1A, 2A, 3A), said method comprising the steps of:
- forming a card body (22) comprising a relay antenna (5) and an insulating cover layer (15, 17) on at least one main face of the card,
- arranging a module (10) equipped with a radiofrequency module antenna (23), on the card body opposite the relay antenna for radiofrequency coupling;
- forming a metal insert (4) in said card body, said insert extending to the edges of the card and said metal insert (4) comprising a space (7) that is permeable to the radiofrequency field opening onto at least one of the two main faces of the insert, **characterized in that** said relay antenna (5) is arranged inside this space, and **in that** the relay antenna (5) is produced on a support substrate (25) and the support substrate (25) of the relay antenna is inserted into said permeable space.

2. The method according to the preceding claim, **characterized in that** the insert comprises or is formed of a metal plate (4) around said space (7) permeable to the radiofrequency field.

3. The method according to one of the preceding claims, **characterized in that** the space (7) is configured so as to form a wedge plane for the support substrate of the relay antenna within the thickness (e) of the insert.

4. The method according to one of the preceding claims, **characterized in that** the relay antenna (5) with its support substrate (25) is assembled to the insert (4) in such a way as to position the relay antenna opposite said permeable space.

5. The method according to one of the preceding claims, **characterized in that** said module (10) is inserted into a cavity provided in the card body.

6. The method according to one of the preceding claims, **characterized in that** said radiofrequency module (10) is previously assembled to the relay antenna (5) and then inserted into the space (7) with the relay antenna.

7. The method according to one of the preceding claims, **characterized in that** said relay antenna is configured without a capacitor plate and defines a second antenna spiral entangled in a first antenna spiral.

8. The method according to one of the preceding claims, **characterized in that** said relay antenna (5) has a total area of between one-third and one-quarter of the main area of the card.

9. The method according to one of the preceding claims, **characterized in that** said relay antenna (5) has a total area equal to three or four times the area of the antenna (23) of the module (10, 23).

10. The method according to one of claims 1 to 8, **characterized in that** said relay antenna (5) has an area outside the plumb line of the module equal to 2 to 4 times the area of a module.

11. The method according to one of the preceding claims, **characterized in that** said plate (4) comprises a slit (11) cutting the plate through its thickness and extending from an outer periphery (9) of the plate to an inner periphery of said space (7) permeable to the radiofrequency field.

12. A radiofrequency chip card (1A,2A,3A) comprising:
- a card body (22) comprising a relay antenna (5) and an insulating cover layer (15, 17) on at least one main face of said card,
- a module (10) equipped with a radiofrequency module antenna (23), arranged on the card body opposite the relay antenna for radiofrequency coupling;
- a metal insert (4) of the card body extending to the edges of the card, said insert comprising a space (7) permeable to the radiofrequency field opening onto at least one of the two main faces of the insert, the card being **characterized in that** said relay antenna (5) is arranged inside this space, and **in that** the relay antenna (25) is made on a support substrate (25) and the support substrate (25) of the relay antenna is inserted into said permeable space.

13. The card according to the preceding claim, **characterized in that** the insert comprises or is formed of a metal plate (4) around said permeable space (7).

14. The card according to one of claims 12 or 13, **characterized in that** said relay antenna is configured without a capacitor plate and defines a second antenna spiral entangled in a first antenna spiral.
